# EUROPEAN PATENT APPLICATION

(11) **EP 3 260 285 A1**
(43) Date of publication of application: **27.12.2017**
(21) Application number: 17175324.7
(22) Date of filing: 09.06.2017
(51) Int. Cl.: B29D 30/30, B29D 30/62, B05C 1/08

(54) **AN APPARATUS FOR FORMING AN ELASTOMERIC STRIP WITH ROTATABLE NOZZLE APPLICATOR**

(30) Priority: 20.06.2016 US 201662352137 P; 18.04.2017 US 201715489788
(71) Applicant: The Goodyear Tire & Rubber Company, Akron, OH 44316 (US)
(72) Inventor: DYRLUND, Christopher David, Canton, OH Ohio 44705 (US); RING, Ralph Damon, Beach City, OH Ohio 44608 (US); STUBER, Neil Philip, Munroe Falls, OH Ohio 44262 (US); ROGENSKI, Elizabeth Amelia, Poland, OH Ohio 44514 (US); WOOD, Jacob Steven, Tallmadge, OH Ohio 44278 (US)
(74) Representative: Kutsch, Bernd

(57) **Abstract**

An apparatus for applying a strip of elastomeric material to a surface is disclosed. The apparatus (100) comprises a nozzle (200) having an inlet in fluid communication with a pumping means, the nozzle (200) having an upper surface and a lower surface, wherein the lower surface has a curved shape for mating engagement with an outer surface of a rotatable roller (300). The lower surface having an opening (231) positioned onto the roller outer surface. The nozzle (200) and the rotatable roller (300) are rotatable. Also, nozzle and roller apparatus is disclosed comprising a rotatable roller (300) having an outer surface, and a nozzle (200) having an inlet and an outlet. The nozzle has a curved surface having an opening (231). The curved surface is positioned in mating engagement with an outer surface of a rotatable roller (300).

## Description

### Technical Field

This invention relates to an apparatus for forming an elastomeric strip.

### Background of the Invention

It is well known in the prior art to manufacture tire components from elastomeric sheets of rubber which are then cut to length with the ends joined together by a lap or butt splice onto a cylindrically shaped building drum. Since the tire components are assembled flat onto a cylindrical tire building drum and then expanded into a toroidal shape, each component has to be placed in tension or compression prior to being molded. This stretching of the various parts causes slippage between the various rubber parts as the components heat up during vulcanization. Attempts to minimize the slippage of the various parts have been attempted. Another disadvantage is that the tire has components which are spliced, wherein the splices contribute to tire nonuniformity.

Tire manufacturers have been increasingly focusing their efforts on eliminating tire nonuniformities. More recently, tire manufacturers are making tire components from a continuous strip of unvulcanized rubber. A thin, narrow strip of unvulcanized rubber is circumferentially wound multiple times onto a rotating drum or toroid shaped core, wherein the strips are successively layered or stacked in order to form the desired shape of the tire component. See for example, US-A-6,372,070 and US-A-4,963,207. The strip of rubber is typically extruded directly onto a tire building drum or toroidal-shaped core using an extruding device. Alternatively the strips may be formed from calendering and then conveyed to the tire drum or core.

This strip lamination method of forming tire components has the advantage of eliminating splices because the annular tire component is typically formed of one continuous strip. Strip lamination has the further advantage of allowing flexibility in manufacturing, since the tire component profile may be changed from tire to tire.

It is known to extrude the rubber through a nozzle or shaping die and to apply the strip of rubber using a roller or stitcher to a tire building drum. However, these systems typically have the disadvantage of causing high pressure and high temperature of the rubber in the system due to the small exit area opening. If the residence time of the rubber is too slow through the system, the rubber may be scorched if the temperature is too high. Thus it is desired to have an improved system which will lower the system temperature and pressure while forming the desired shape of the rubber strip.

### Summary of the Invention

The invention relates to an apparatus in accordance with claim 1 and to an apparatus in accordance with claim 13.

Dependent claims refer to preferred embodiments of the invention.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein said nozzle compresses said elastomeric material directly onto the outer surface of the roller.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the elastomeric material is in a molten state in the nozzle.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the elastomeric material is in a molten state in the apparatus.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the elastomeric material is in a molten state prior to entering the apparatus.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the elastomeric material is in a molten state when it is applied to the roller outer surface.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the nozzle has a shaped die surface that cooperates with the curved outer surface of the roller to form a nozzle outlet.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein said roller is heated to a temperature in the range of from 93 degree Celsius to 177 degree Celsius.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the pumping means is an extruder.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the pumping means is an extruder in combination with a gear pump.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the apparatus further comprises an interior channel, wherein the interior channel decreases in area.

One or more embodiments of the present invention provide an apparatus for applying a strip of elastomeric material to a surface, the apparatus comprising: a nozzle having an inlet in fluid communication with a pumping means, said nozzle having an upper surface and a lower surface, wherein the lower surface has a curved shape for mating engagement with an outer surface of a rotatable roller, said lower surface having an opening positioned onto the roller outer surface, wherein said nozzle and said rotatable roller are rotatable, and wherein the outlet of the nozzle has a V shaped outlet.

One or more embodiments of the present invention provide a nozzle and roller apparatus comprising a rotatable roller having an outer surface, and a nozzle having an inlet and an outlet, said nozzle having a curved surface having an opening, wherein the curved surface is positioned in mating engagement with an outer surface of a rotatable roller.

One or more embodiments of the present invention provide a nozzle and roller apparatus comprising a rotatable roller having an outer surface, and a nozzle having an inlet and an outlet, said nozzle having a curved surface having an opening, wherein the curved surface is positioned in mating engagement with an outer surface of a rotatable roller, and wherein the outlet of the nozzle further includes a die.

One or more embodiments of the present invention provide a nozzle and roller apparatus comprising a rotatable roller having an outer surface, and a nozzle having an inlet and an outlet, said nozzle having a curved surface having an opening, wherein the curved surface is positioned in mating engagement with an outer surface of a rotatable roller, and wherein the outlet of the nozzle is formed between the roller outer surface and the curved surface of the nozzle.

One or more embodiments of the present invention provide a nozzle and roller apparatus comprising a rotatable roller having an outer surface, and a nozzle having an inlet and an outlet, said nozzle having a curved surface having an opening, wherein the curved surface is positioned in mating engagement with an outer surface of a rotatable roller, and wherein the roller is pivotally mounted so it can pivot about a fixed point.

### Definitions

"Axial" and "axially" means lines or directions that are parallel to the axis of rotation of the tire.

"Circumferential" means lines or directions extending along the perimeter of the surface of the annular tread perpendicular to the axial direction;

"Equatorial plane" (EP) means the plane perpendicular to the tire's axis of rotation and passing through the center of its tread;

"Radial" and "radially" means directions radially toward or away from the axis of rotation of the tire;

### Brief Description of the Drawings

The invention will be described by way of example and with reference to the accompanying drawings in which:
Figure 1 is a perspective view of a rubber applicator apparatus of the present invention.
Figure 2 is a close-up perspective view of a roller and nozzle of the rubber applicator apparatus of the present invention.
Figure 3 is a side cross-sectional view of the apparatus of Figure 1.
Figure 4 is a close-up side view of the roller and nozzle wherein the nozzle is shown with half the nozzle removed;
Figure 5 is a side view of the nozzle;
Figure 6 is a perspective view of the nozzle outlet;
Figure 7 is an end view of the outlet of the nozzle;
Figure 8 is a side view of the rubber applicator apparatus shown applying a rubber strip to a tire building drum;
Figure 9 is a side view of the rubber applicator apparatus showing the axis of rotation;
Figure 10 is a side view of a first embodiment of a rotatable nozzle and rubber applicator apparatus showing the axis of rotation;
Figure 11 is a side view of a second embodiment of a rotatable nozzle and rubber applicator apparatus showing the axis of rotation; and
Figure 12 is a side view of a third embodiment of a rotatable nozzle and rubber applicator apparatus showing the axis of rotation.

### Detailed Description of Example Embodiments of the Invention

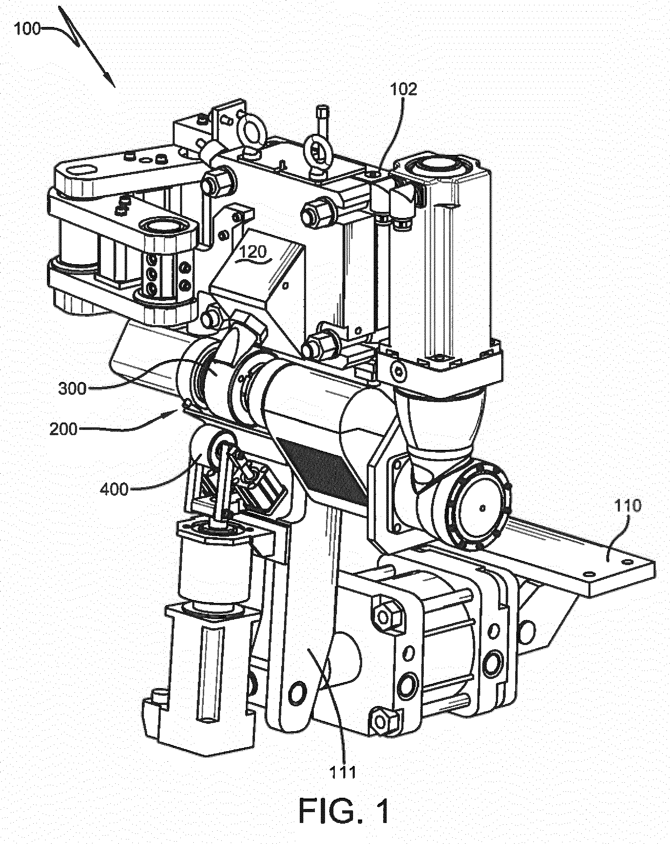

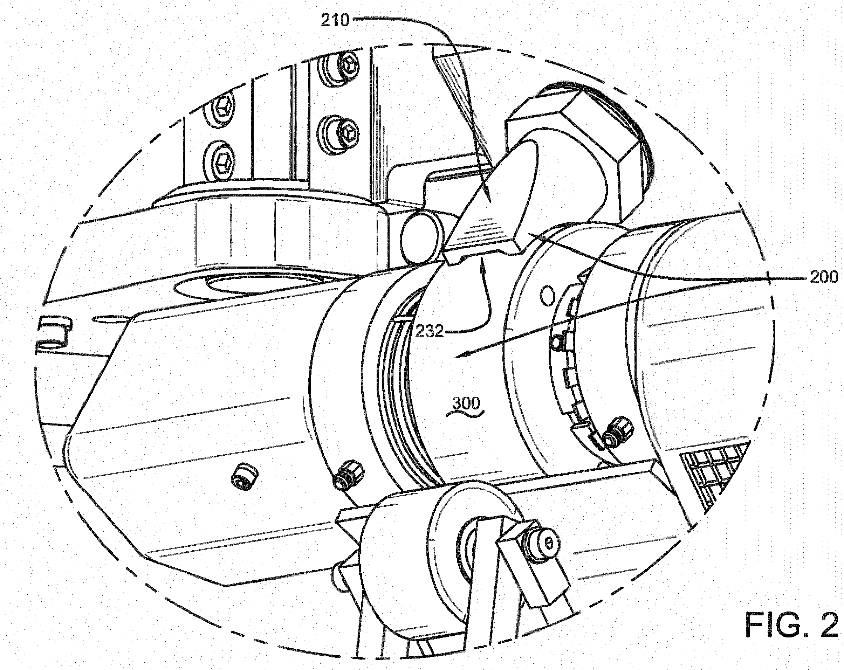

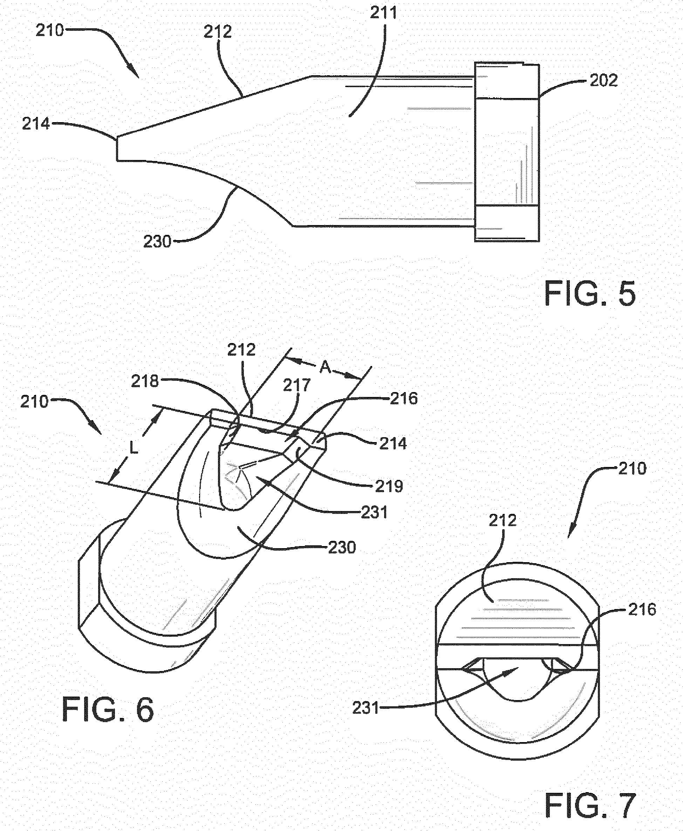

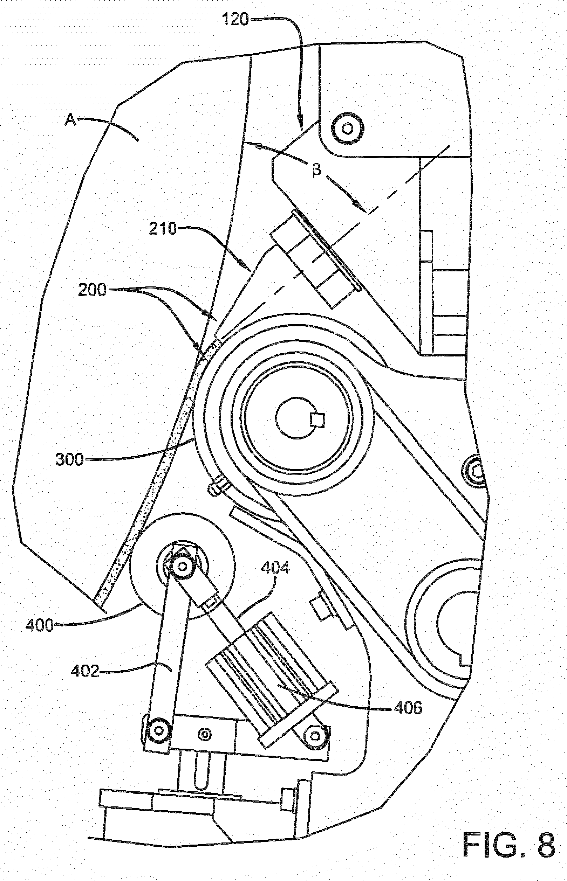

A first embodiment of a rubber applicator apparatus 100 is shown in Figures 1-7. The applicator apparatus 100 provides a novel apparatus to form elastomeric tire components quickly and efficiently from a single continuously wound strip or multiple strips of unvulcanized rubber. A continuous strip of unvulcanized rubber may be applied directly onto a tire building surface such as a tire building drum A as shown in Figure 8, or a toroidal shaped core (not shown).

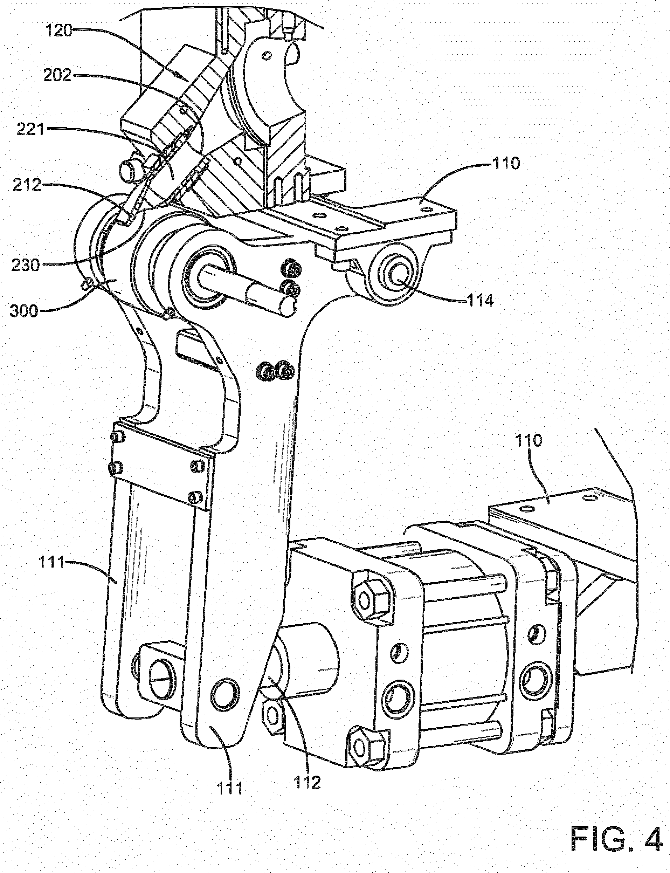

As shown in Figure 1, the applicator apparatus 100 includes a support frame 110 (parts of which have been removed for clarity), and a roller nozzle 200. The support frame may further include support rails for translating the entire applicator apparatus in the X, Y and Z direction (not shown).). A rotatable linkage 111 is mounted to the support frame 110, and functions to pivot the roller 300 about fixed point 114 as shown in Figure 4. The rotatable linkage 111 is connected to actuator arm 112 which translates fore and aft to pivot the rotatable linkage 111 about the fixed point 114, so that the roller may likewise be pivoted.

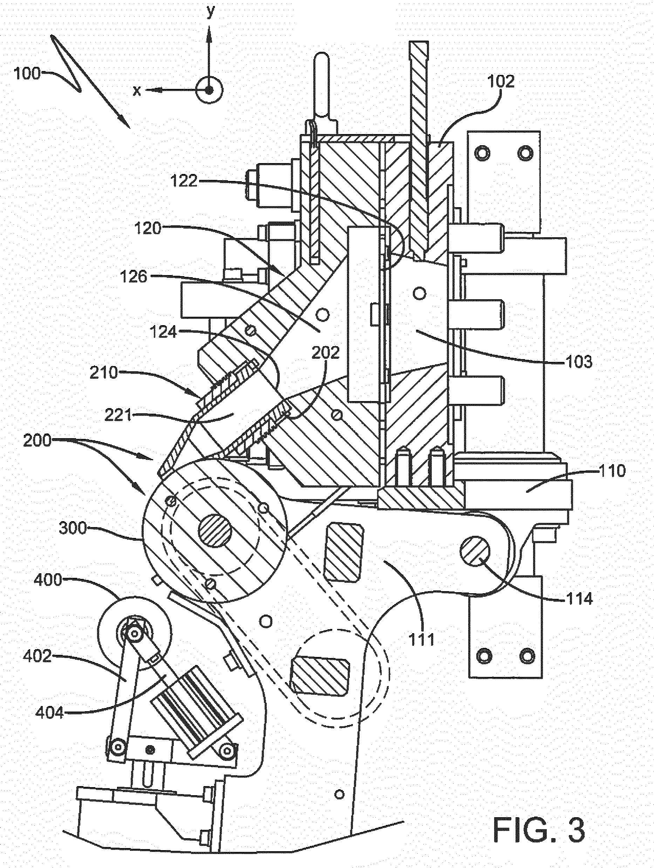

As shown in Figure 3, the support frame 110 includes a mounting flange 102 for connecting to a rubber pumping means such as an extruder, gear pump, extruder-gear pump combination, or rubber injector (not shown). The rubber or elastomer output from the rubber pumping means is fed into an internal passage 103 of the mounting flange and then into a transition member 120. The transition member 120 has an interior channel 126 having an inlet end 122 and an outlet end 124. The inlet end 122 preferably has a larger area than the outlet end 124, resulting in a decreasing area or a funnel-shaped channel 126. Channel 126 is also angled downwardly in the range of from 30 to 75 degrees with respect to the X axis, more typically from 45 to 60 degrees. The outlet end 124 of the transition member is connected to an inlet end 202 of a nozzle 210.

The nozzle 210, as best shown in Figures 3-7, has a generally cylindrically shaped outer body 211 terminating in an angled face 212 at the nozzle outlet. The nozzle has an interior channel 221 that has a decreasing area from the inlet end 202 to the outlet orifice of the nozzle. The angled face 212 of the nozzle terminates in an edge 214. The edge 214 forms a juncture between the angled face 212 and a curved outlet surface 230 of the nozzle. The lower surface of the edge 214 has a shaped die surface 216 that cooperates with the curved outer surface of the roller 300 to form the nozzle outlet. The shaped die surface 216 in this example, has a flat edge 217 with opposed beveled ends 218, 219 which forms a strip with beveled edges. The die shape is not limited to the configuration shown, and may form other shapes as desired. The curved lower surface 230 of the nozzle is shaped to cooperate with the outer surface of roller 300 in order to form the strip. The lower surface of the nozzle has an opening 231 that is preferably v shaped. The opening 231 has an axial width A and a longitudinal length L, wherein the length is greater than 1.5 times the axial width A. The opening 231 is wide to allow the rubber to engage the outer surface of the roller 300 before exiting the outlet 232. The wide opening allows the rubber or elastomer to engage the outer surface of the roller. As the roller 300 rotates, the outer surface of the roller 300 engages the rubber flowing through the nozzle, and pulls the rubber towards the nozzle outlet 232. The pulling of the rubber by the roller lowers the internal pressure and temperature of the rubber as it travels through the system 100. The lower extrusion temperatures reduce stretch of the rubber. As the rubber is pulled towards the nozzle outlet 232, it is shaped by die surfaces 217, 218, 219 of the upper edge 214 and the roller outer surface 300. Preferably, the roller 300 is heated.

The outlet die surfaces 217, 218, 219 of the nozzle is shown with a trapezoidal shape, however other configurations may be used such as, but not limited to, square, rectangular, triangular, etc. The width of the rubber strip output from the nozzle orifice is typically about 15 mm in width, but may vary in the range of from 5 mm to 30 mm. The nozzle 212 may be optionally heated or cooled to a temperature in the range of from -18 to 94 degree Celsius using external or internal heaters (not shown).

As shown in Figure 8, the nozzle 210 is oriented with respect to the tire building drum A, core (not shown) or other application surface typically at an angle β in the range of from 0 to 50 degrees, more typically in the range of from 20-35 degrees. The rubber from the nozzle is first adhered to the roller 300, and then pushed through the nozzle outlet and then applied by the rotating roller 300 to the tire building drum A, as shown in Figure 8. A stitcher roller 400 is positioned adjacent the roller 300, and applies pressure to secure the strip onto the drum. The stitcher roller 400 is attached to link arm 402, that is pivotally connected to the support frame 110. The stitcher roller 400 is connected to actuator arm 404 connected to actuator 406.

The roller assembly 300 preferably has internal heaters for heating the outer surface in the range of from 93 degree Celsius to 205 degree Celsius, and more preferably in the range of from 176 degree Celsius to 205 degree Celsius. Thus, the roller functions as a hot knife, smoothing and smearing the freshly deposited rubber, melting and blending the adjacent strips of rubber together, into a homogeneous mass. The higher roller temperature does not impact the curing of rubber due to the short residence time. The stitcher assembly 400 performs a stitcher function due to the pressure of the roller against the drum, smoothing out the air pockets. The outer surface of the roller also helps shape the formed component.

The roller assembly 300 preferably is connected to a linkage system connected to an air cylinder as shown in Fig. 4, so that the roller 300 may be raised and lowered.

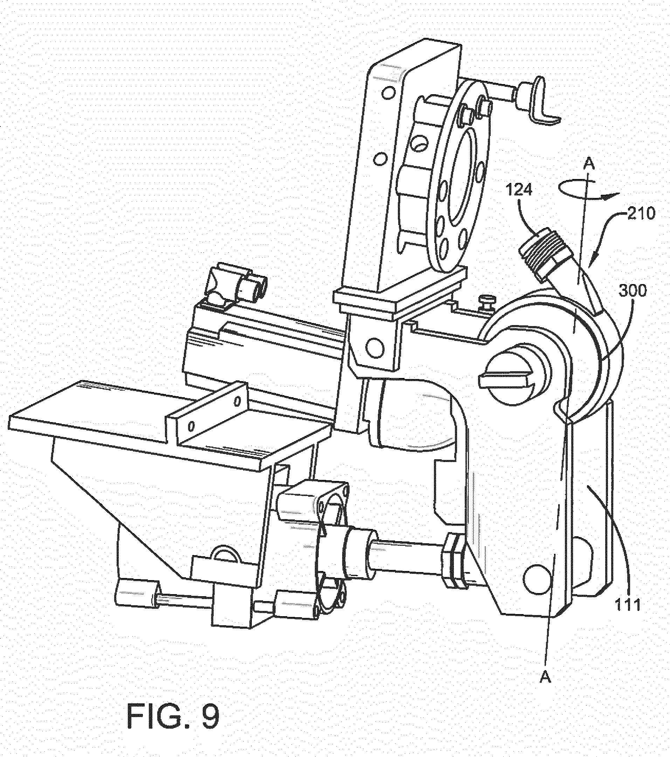

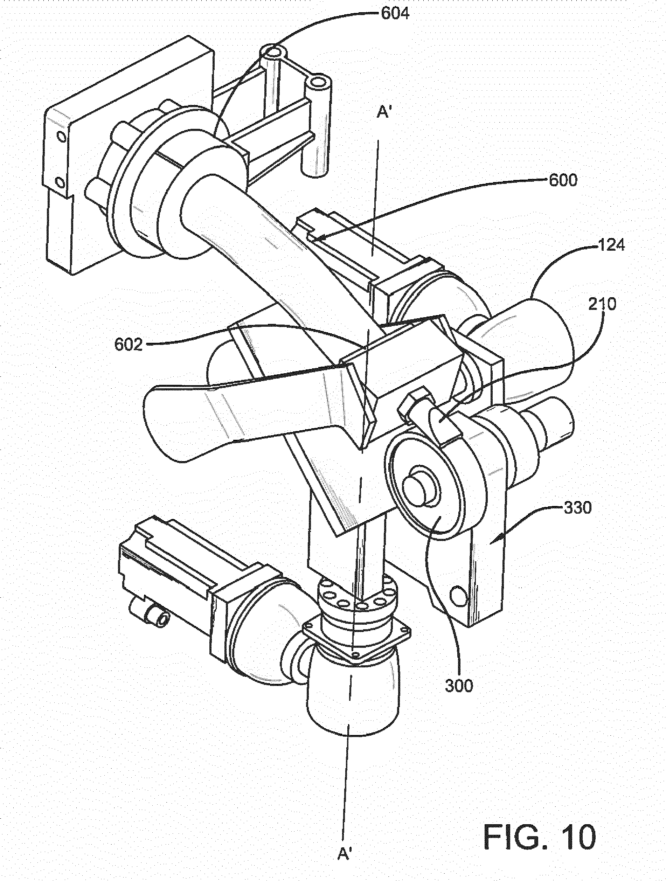

It is further desired that the roller nozzle 210 and roller 300 may be rotated about an axis A-A as shown in Figure 9. The rotation or swiveling about axis A-A is useful to allow application of a rubber strip to sidewalls of a tire and other components with difficult geometrical limitations. Figure 10 illustrates a first embodiment of a roller nozzle 210 and roller 300 about axis A'-A'. In order to facilitate the rotation of the nozzle 210 about axis A'-A', the outlet end 124 of the nozzle is connected to a flexible coupling 600. A first end 602 of the flexible coupling is rotatably connected to the outlet end 124 of the nozzle. A second end 604 of the flexible coupling is rotatably connected to the inlet end 103 of the mounting flange. The roller nozzle 210, roller 300 is connected to a support bracket 330 that is rotatably mounted to gear box and motor to allow rotation of the roller nozzle, roller 300 and support bracket about the Axis A'-A'. The roller nozzle, roller and support bracket is able to rotate at least +/- 15 degrees.

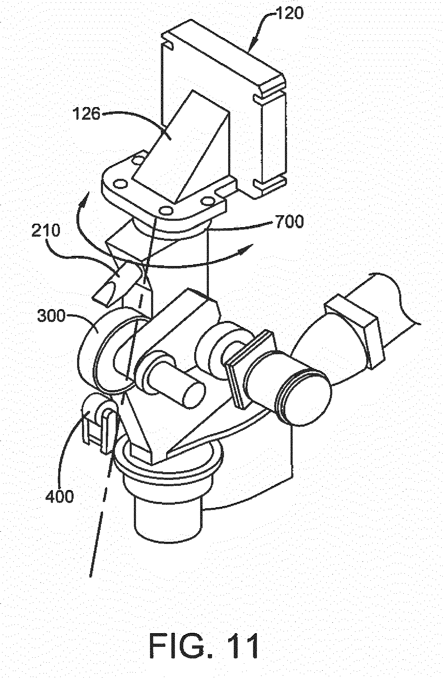

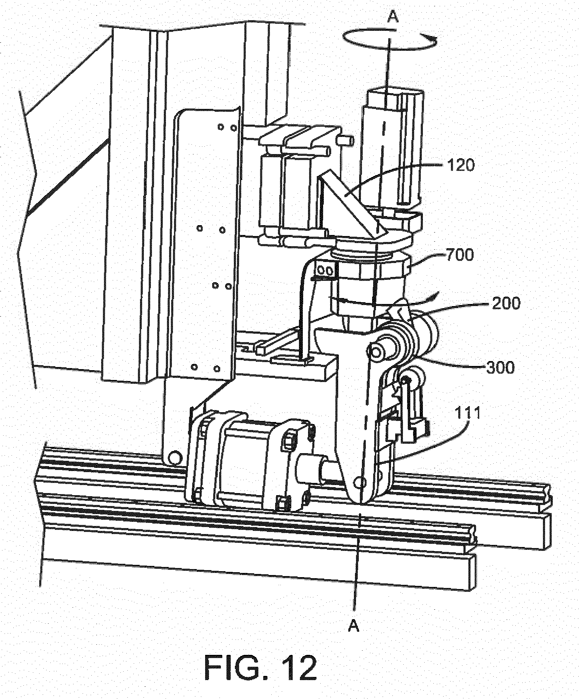

Figures 11 and 12 illustrate a second embodiment of a rotatable nozzle assembly 210 and roller 300. As shown in the figures, a rotatable coupling 700 is inserted between the between the inlet of the nozzle and the outlet of the transition member. The transition member is fixed, while the nozzle and roller is rotatable about axis A-A.

## Claims

1. An apparatus for applying a strip of elastomeric material to a surface, the apparatus (100) comprising a nozzle (200) having an inlet in fluid communication with a pumping means, said nozzle (200) having an upper surface and a lower surface, wherein the lower surface has a curved shape for mating engagement with an outer surface of a rotatable roller (300), said lower surface having an opening (231) positioned onto the roller outer surface, wherein said nozzle (200) and said rotatable roller (300) are rotatable.

2. The apparatus of claim 1, wherein the nozzle (200) is configured to compresses elastomeric material directly onto the outer surface of the roller (300).

3. The apparatus of claim 1 or 2, wherein the apparatus (100) is configured such that the elastomeric material is in a molten state in the nozzle (200).

4. The apparatus of claim 1, 2 or 3, wherein the apparatus (100) is configured such that the elastomeric material is in a molten state in the apparatus (100).

5. The apparatus of at least one of the previous claims, wherein the apparatus (100) is configured such that the elastomeric material is in a molten state prior to entering the apparatus (100).

6. The apparatus of at least one of the previous claims, wherein the apparatus (100) is configured such that the elastomeric material is in a molten state when it is applied to the roller outer surface.

7. The apparatus of at least one of the previous claims, wherein the nozzle (200) has a shaped die surface (216) that cooperates with the curved outer surface of the roller (300) to form a nozzle outlet.

8. The apparatus of at least one of the previous claims, wherein the apparatus (100) is configured such that the roller (300) can be heated to a temperature in the range of from 93 degree Celsius to 177 degree Celsius.

9. The apparatus of at least one of the previous claims, wherein the pumping means is an extruder.

10. The apparatus of at least one of the previous claims, wherein the pumping means is an extruder in combination with a gear pump.

11. The apparatus of at least one of the previous claims, further comprising an interior channel (221), wherein the interior channel decreases in area.

12. The apparatus of at least one of the previous claims, wherein the outlet (232) of the nozzle (200) is or has a V shaped outlet.

13. A nozzle and roller apparatus comprising: a rotatable roller (300) having an outer surface, and a nozzle (200) having an inlet and an outlet, said nozzle having a curved surface having an opening (231), wherein the curved surface is positioned in mating engagement with an outer surface of a rotatable roller (300).

14. The roller and nozzle apparatus of claim 13, wherein the outlet of the nozzle (200) further includes a die.

15. The roller and nozzle apparatus of claim 13 or 14, wherein the outlet of the nozzle (200) is formed between the roller outer surface and the curved surface of the nozzle; and/or wherein the roller (300) is pivotally mounted so it can pivot about a fixed point.
